# EUROPEAN PATENT SPECIFICATION

(11) **EP 2 898 159 B1**
(45) Date of publication and mention of the grant of the patent: **15.01.2020**
(21) Application number: 13834827.1
(22) Date of filing: 09.09.2013
(51) Int. Cl.: E04G 25/02, F16B 37/08, E03F 5/04, F16B 5/02, F16B 37/04

(54) **ARRANGEMENT AND METHOD FOR SUPPORTING AN ELEMENT**
ANORDNUNG UND VERFAHREN ZUR ABSTÜTZUNG EINES ELEMENTES
AGENCEMENT ET PROCÉDÉ DE SUPPORT D'UN ÉLÉMENT

(30) Priority: 10.09.2012 FI 20125937
(43) Date of publication of application: 29.07.2015
(73) Proprietor: Vieser Oy, 61850 Kauhajoki as. (FI)
(72) Inventor: RAJAMÄKI, Veikko, 61850 Kauhajoki As. (FI)
(74) Representative: Kolster Oy Ab
(86) International application number: PCT/FI2013/050865
(87) International publication number: WO 2014/037624

(56) References cited:
- EP-A1- 1 445 499
- WO-A1-00/49254
- DE-A1-102010 005 975
- DE-U1- 20 019 594
- DE-U1- 20 019 594
- US-A- 6 146 076
- US-A- 6 146 076

## Description

### Background of the invention

The present invention relates to an arrangement according to the preamble of claim 1.

The invention also relates to a method according to the preamble of claim 6.

Especially in connection with concreting of floors, it is particularly challenging to install elements that remain inside a cast onto a slab formwork so that they cannot move during concreting. Elements, such as floor traps, to be placed to the floor surface level, with the top surface installed as horizontally as possible and to a desired height position, are particularly problematic. In addition, getting the pipes to be installed in the concreting to the correct height also presents a major challenge.

Floor traps, for example, have been installed using support rings to be placed under the drain, or the like. Attempts have also been made to fasten them to the surrounding reinforcements or to ribbed bars installed to the moulds.

However, the prior art solutions are complicated and slow to implement, or result to an installation that is too imprecise. Moreover, often the stepwise adjustment of the current solutions causes problems when an attempt is made to install the element to the exactly correct height. Document DE 200 19 594 U1 discloses an adjusting device of a frame. Document US 6 146 076 A discloses a support structure including a snap nut.

### Brief description of the invention

It is thus an object of the invention to develop an arrangement so as to solve the above-mentioned problems. This object is achieved by an arrangement for supporting an element in a casting that has, in accordance with the present invention, the characteristic features defined in the claims.

More specifically, the arrangement according to the invention is mainly characterised by what is disclosed in claim 1. The method of the invention, in turn, is characterized by what is disclosed in claim 6.

Preferred embodiments of the invention are disclosed in the dependent claims.

The idea of the invention is that an element to be installed to a casting is provided with support means that are easy to adjust and may be cut to a suitable length, and are quick to install in place yet affordable with regard to costs.

In the context of this invention, the term "element" refers to an element which in its final state of use is to a significant extent surrounded by other structures. It is essential to such elements that they can be installed firmly to the exactly correct position before the final structure is completed, for example before concreting is begun or the flooring of a wooden floor is finished.

The invention provides considerable advantages. Hence the present solution allows an element to be installed to its mounting base very quickly. At the same time, an installation is achieved that allows the vertical position of the element, for example, to be easily adjusted in a stepless manner until the completion of the structure.

A solution according to the present invention may be applied not only to floor traps but also to other elements to be installed to structures. However, nothing prevents the invention from being employed also in installation works made on vertical structures. The present solution may be used both in concreted structures and in other kinds of structures, such as wooden intermediate floors.

The arrangement of the invention allows an element to be quickly installed to the correct height because its main parts, i.e., a support arm and locking means, may be joined at any point of the stem length. This is possible because the structure of the locking means is open, or may be separately opened, and thus allows the locking means to be placed to the support arm in a lateral direction, i.e., without having to rotate it to the right height position along the thread of the support arm. Once the element is in place in the site of use, its final position is also easy to check and, when necessary, to fix by few rapid turns of the support arm.

By arranging the support arm to be rotatable in relation to the normal of the mounting base, irregularities in the formwork, for example, may be taken into account better. In addition, the support arm may be moved along the mounting base to some extent if it cannot be placed to the exactly correct position due to reinforcements or other surrounding structures.

The threads in the support arm and the surrounding members allow the height position of the element to be adjusted steplessly, instead of the stepwise adjustment in the currently used competitive solutions.

In addition, the present solution allows the adjusted position of the element to be maintained better than before despite any rough treatment the element is exposed to during the building works.

Other advantages of the invention are presented in the following in connection with a more detailed description of special embodiments of the invention.

### Brief description of the figures

In the following, some preferred embodiments of the invention will be explained in closer detail as well as background art and examples useful for understanding the invention with reference to the accompanying drawing, in which
Figure 1 is a schematic, axonometric view of the arrangement;
Figure 2 is a schematic, axonometric view of a second embodiment of the arrangement;
Figure 3 is a sectional view according to line A-A of Figure 2;
Figure 4 shows an element provided with a jointing member according to an embodiment;
Figure 5 shows a detail of the jointing member of Figure 4;
Figure 6 shows a detail view of a locking means according to the second embodiment;
Figure 7 is a front view of a third embodiment of the locking means arranged to the support arm, being an embodiment of the invention;
Figure 8 is a rear view of the locking means of Figure 7;
Figure 9 is a side view of a fourth embodiment of the locking means to the arranged to the support arm;
Figure 10 is a view from below of the fourth embodiment of the locking means;
Figure 11 is a side view of the support arm;
Figure 12 is a top diagonal view of the support arm of Figure 11;
Figure 13 is a diagonal view from below of the support arm of Figure 11;
Figure 14 is a detailed view of a foot according to an embodiment;
Figure 15 is a sectional view of the foot of Figure 14 along line B-B;
Figure 16 shows a detail of the support arm arranged to the foot of Figure 14; and
Figure 17 shows the operation of the method presented.

### Detailed description

The present figures do not show the arrangement for supporting an element in scale but the figures are schematic, illustrating the general structure and operation of the embodiments. Structural parts indicated by reference numerals in the accompanying figures then correspond to structural parts provided with reference numerals in this specification.

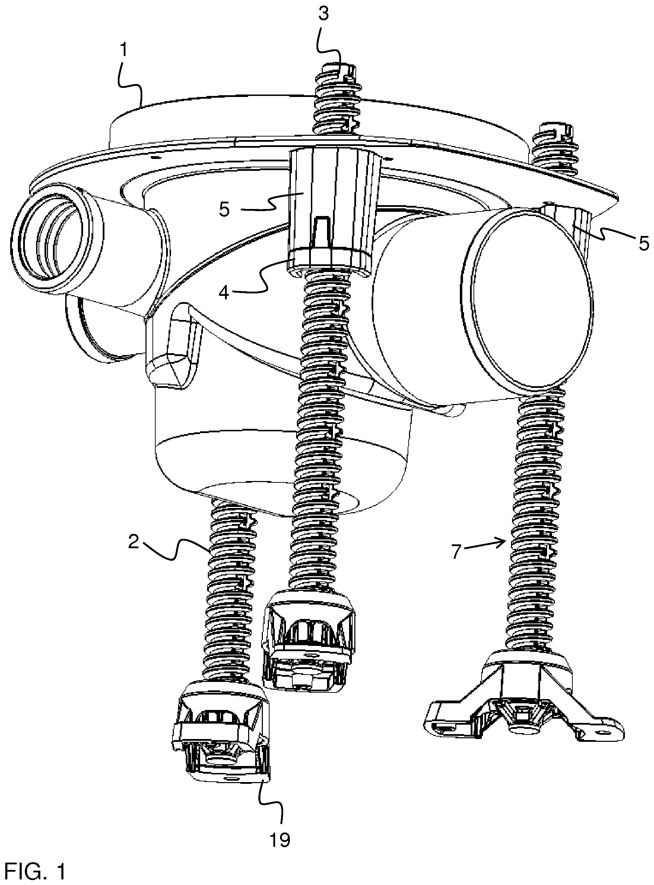

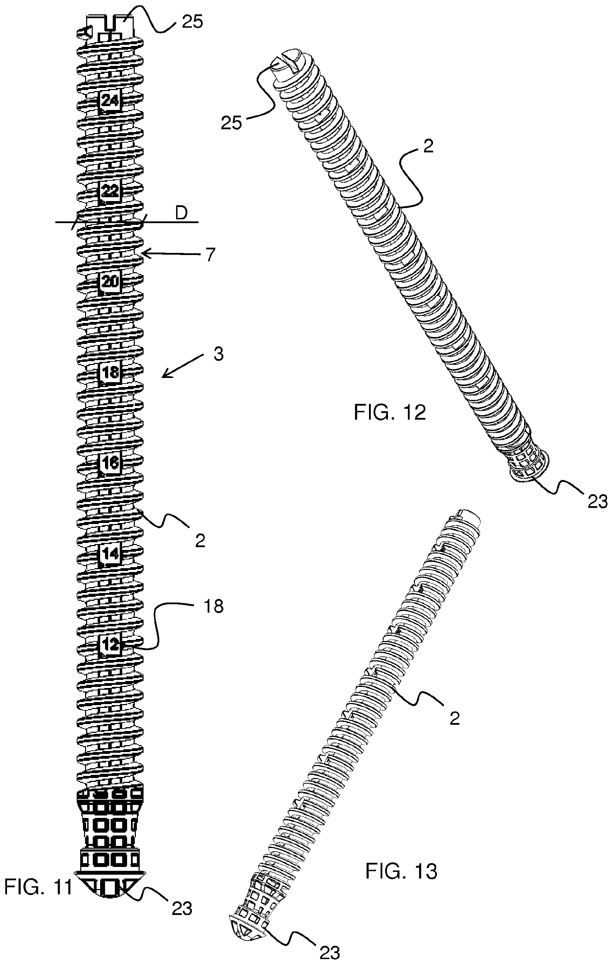

Figure 1 shows an embodiment of an arrangement in its entirety. The arrangement for supporting an element 1 thus comprises at least one elongated support arm 3 provided with an outer thread 2. A preferred embodiment of the support arm is shown in Figures 11 to 13.

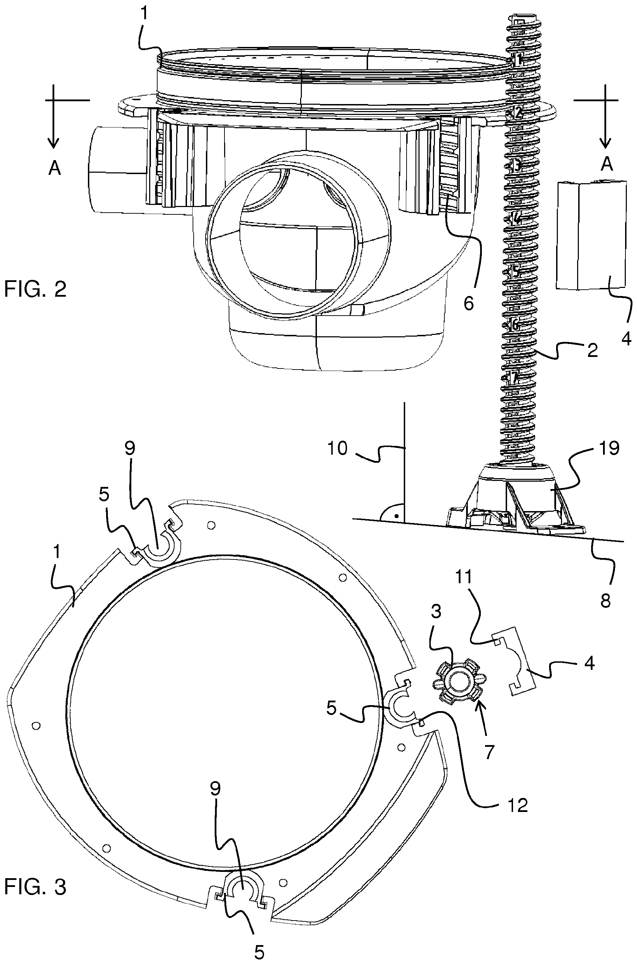

The support arm in question may be provided with at least one locking means 4 on any optional location of the arm. By the locking means the support arm is further arranged to a jointing member 5, one or more of which may be provided in the element. The jointing member 5 and/or the locking means 4 is provided with an internal helical thread 6 that corresponds to an external helical thread on the support arm 3. The locking means is thus placeable on an outer surface 7 of the support arm in a direction perpendicular to the longitudinal axis of the support arm, the locking means and the support arm arranged thereto being then guidable into the jointing member. The support arm arranged to the jointing member of the locking means is thus arranged to project from the element towards the mounting base 8, which is schematically shown in Figure 2.

In the embodiment of Figures 2 and 3, the jointing member 5 arranged to the element comprises an elongated connection channel 9, see Figure 3, whose longitudinal axis is substantially parallel with the normal 10 of the mounting base 8 when the element is in its position of use. This allows the projection of the support arm 3 from the element towards said mounting base 2 schematically shown in Figure 2 to be achieved.

When the locking means 4 of Figures 2 and 3 is provided with a smooth inner surface, it may be slid along the outer surface 7 of the support arm into the jointing member. Hence a form-locking is achieved between the jointing member and the locking means by providing them with opposite guide elements 11 and 12 according to Figure 3.

Alternatively, the inner surface of the locking means 4 alone, or that of both the locking means and the jointing member 5, may be provided with the helical thread 6, in which case the required form-locking is achieved by pressing the locking means perpendicularly against the jointing member. In an embodiment of this kind, the locking means yields enough to allow the guide elements 11 provided therein to bend outward momentarily and then attach to the guide elements 12 of the jointing member. Alternatively, the guide elements in the locking means may be replaced by gripping claws to allow the pressing force needed for the joint to be reduced.

It is also conceivable that, instead of the locking means 4, the support arms 3 arranged to the jointing members 5 are secured in place by a tightening band or a similar means that at least partly surrounds the element 1 and provides a pressing force, such a means similar to a conventional cable tie. In this type of embodiment, the support arms are first set into the jointing members provided in the element, as shown in Figure 2, and then the tightening band is guided to surround the element on the outside of the support arms. At the same time as the band is being tightened, the support arms press firmly against the jointing members.

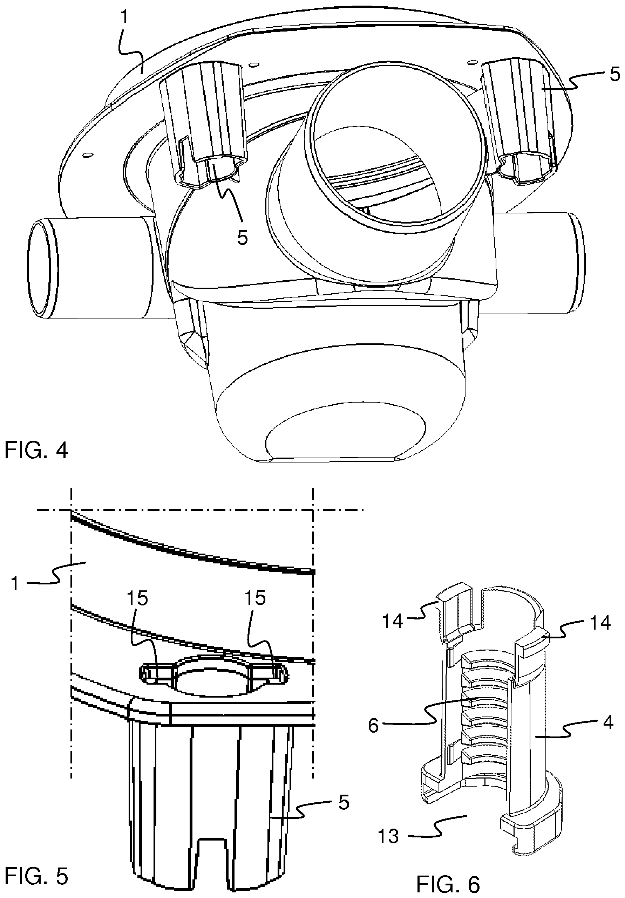

In the embodiment of Figures 4 to 8, the jointing member 5 arranged to the element 1 comprises a particular slot receiving and mostly surrounding the locking means 4 installed to the support arm 3. In that case the support arm is provided with a locking means having an inner helical thread 6, specific embodiments of the locking means being shown in Figures 6, 7 and 8. In Figure 1 the locking means is mostly covered by the jointing member 5 provided in the element and receiving the locking means.

The embodiment in Figure 6 shows the locking means 4 provided with an opening 13 extending in the direction of its longitudinal axis, the opening being open on the entire length of the locking means and having a width substantially equal to a diameter D of the support arm, see Figure 11. The opening allows the locking means to be easily guided to grab the support arm 3, at any point on its length, without the need to screw the locking means to the support arm from its end. This speeds up the installation of the locking means to the support arm considerably, and the support arm together with its locking means may be rapidly placed into the slot formed to the element by the jointing member. For the locking means to stay in place in the thread of the support arm, it is advantageous to make the opening in the locking means slightly smaller than the diameter of the support arm. This allows the locking means to be pressed to the support arm from the lateral direction thereof. On the other hand, the locking means may be detached and re-installed if the previous point of installation does not produce the desired result.

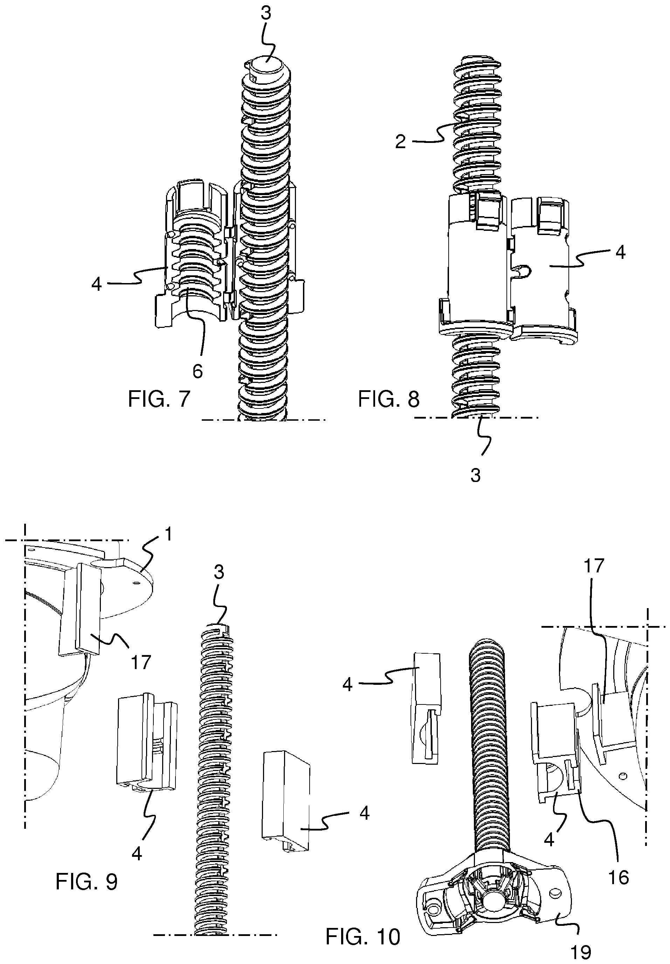

In the embodiments of Figures 7 to 10 the locking means 4 is formed of a part substantially surrounding the support arm 3 in such a manner that two parts of the locking means provided with an inner thread 6 are joined to surround the support arm and its outer thread 2. According to Figures 7 and 8, the locking means consists of two parts hinged together, the parts being bent around the support arm. When pressed against each other, the parts of the locking means become interlocked. The parts are preferably joined together in a detachable manner, allowing an opened locking means to be moved to another point on the support arm if the previous point of installation does to produce the desired result. The locking means is also achievable from two separate parts provided with an inner thread, the parts being joined and locked together to surround the support arm and its outer thread. This type of embodiment is shown in Figures 9 and 10. Also in this case the parts are joined together preferably in a detachable manner to allow the locking means to be moved faster. Minor adjustments may be carried out simply by rotating the support arm and the locking means in relation to one another.

By guiding the locking means 4, which is at least partly surrounded by the support arm 3, to the slot formed by the jointing member 5, shown better for example in Figures 4 and 5, a so-called form-locking may be provided between the locking means and the slot. At its simplest, the form-locking in question is based merely on the wedging of the locking means against the slot walls. However, it is advantageous to enhance the locking by providing the locking means with specific flexible claws 14, which are pressed to the side when the locking means is pressed into the slot and then spring back when the locking means reaches cuts 15, shown in Figure 5, provided at the end of the slot for receiving the claws.

The locking means 4 may also be attached to the element 1 as shown in Figures 9 and 10. In that case the locking means that at least mostly surrounds the support arm 3 is provided with a specific carrier 16 that may be slid onto a guide element 17 provided in the element and forming a jointing member. In this kind of solution the required form-locking is achieved for example by providing the guide and/or carrier with teeth. Alternatively, the carrier and/or guide may be made to narrow/extend so that when pressed together, the parts wedge to one another in a desired manner.

When the support arm 3 and the locking means 4 are attached to the element 1, the support arm projects from the element towards the mounting base 8. In this position the projection of the support arm may still be adjusted by a simple rotating movement in relation to the locking means 4. If the final height position of the top surface of the element in relation to the mounting base is known, the projection of the support arm is easy to adjust by making use of height marks 18 arranged on the support arm length, the marks being disclosed in greater detail in Figure 11, for example. At this stage the arrangement is arranged onto its mounting base 8 and the position of the element 1 is checked. When necessary, the height and inclination is fine-adjusted by rotating one or more support arms 3 in relation to their locking means 4. Finally, the support arms are fastened to the mounting base by fastening means known per se, such as nails or screws, or by tying them to the surrounding reinforcements or other surrounding structure.

To facilitate the fastening of the support arm 3, it may be provided with a specific foot 19. This may be in the form of a solid convex base plate, like the cap of a mushroom, and provided with through holes 20 for receiving the fastening means.

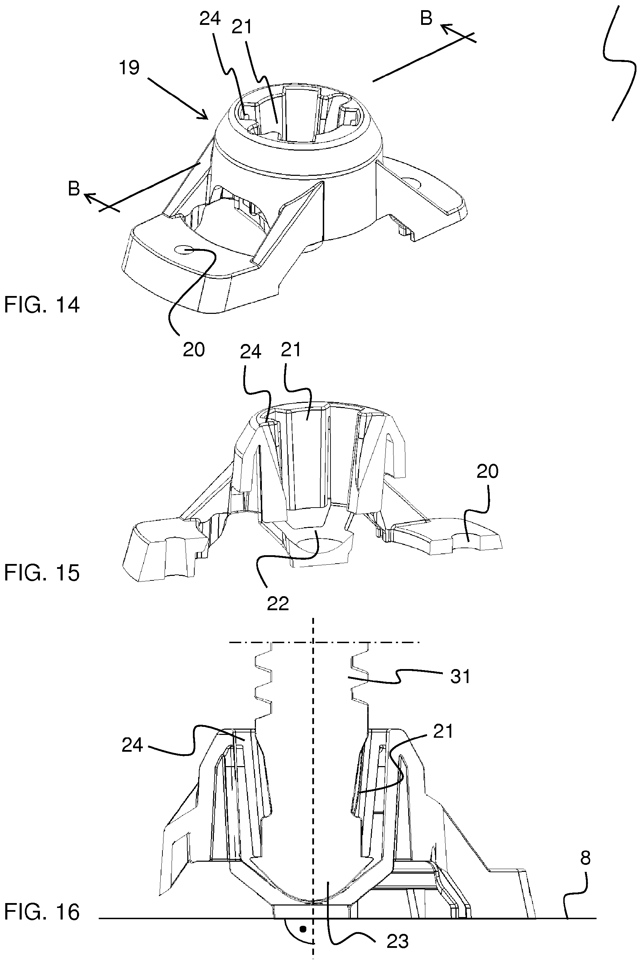

The foot 19 arranged to an end of the support arm 3 may also be formed of a separate means, as shown in Figures 14 to 16. In fact, the joint between this kind of foot and the support arm is arranged to be loose in such a manner that it allows a rotating movement of the support arm in relation to a vertical line formed by the normal 10 of the mounting base. The foot preferably comprises a positioning channel 21 into which the support arm may be arranged. The positioning channel comprises a cross-section that is greater than the cross-section D of the support arm. The cross-section of the end 22 that is oriented against the mounting base of the positioning channel is, however, larger than the rest of the positioning channel and thus arranged to receive an extension portion 23 that is at the outermost end of the support arm, as may be seen also in Figures 11 and 13. When the support arm is being guided into the foot, the structures yield somewhat to allow the extension part of the support arm to reach the end of the foot, to which the extension part locks because of its cross-section that is larger than the positioning channel. The large positioning channel still allows lateral tilting movements of the support arm and thus the rotating of the support arm in relation to the assumed normal 10 of the mounting base allows unevenness or indirectness of the base to be taken into account better, or disadvantageous fastening points between the support arm and the base to be avoided.

The foot 19 is preferably provided with one or more locking grooves 24 for receiving the fastening means so that the support arm 3 and the foot may be locked in relation to one another to be in a substantially rigid position. In addition, the foot is preferably provided with one or more fastening holes 20 for receiving the fastening means and for fastening the foot to the mounting base 8.

The foot 19 of the preferred embodiment of the figures comprises an external appearance in which good access of concrete into the structure in particular has been taken into account when the disclosed arrangement is used in cast structures. Hence no voids of entrapped air are created during casting in the foot or in the immediate vicinity thereof. On the other hand, the foot occupies an area as small as possible against the casting mould and, thus, on the bottom surface of the casting there is left an as small as possible non-concrete trace that is to be evened out or otherwise covered.

As shown in Figures 11 and 12, the end of the support arm 3 of the arrangement that faces the mounting base 8 comprises particular members 25 for receiving a tool, known per se, the tool allowing a rotating movement of the support arm in relation to its longitudinal axis to be achieved when the height position of the element 1 is being adjusted. In addition, the support arm is preferably made of a plastic material in order for the arm to be easy to cut when the element is in place on the mounting base.

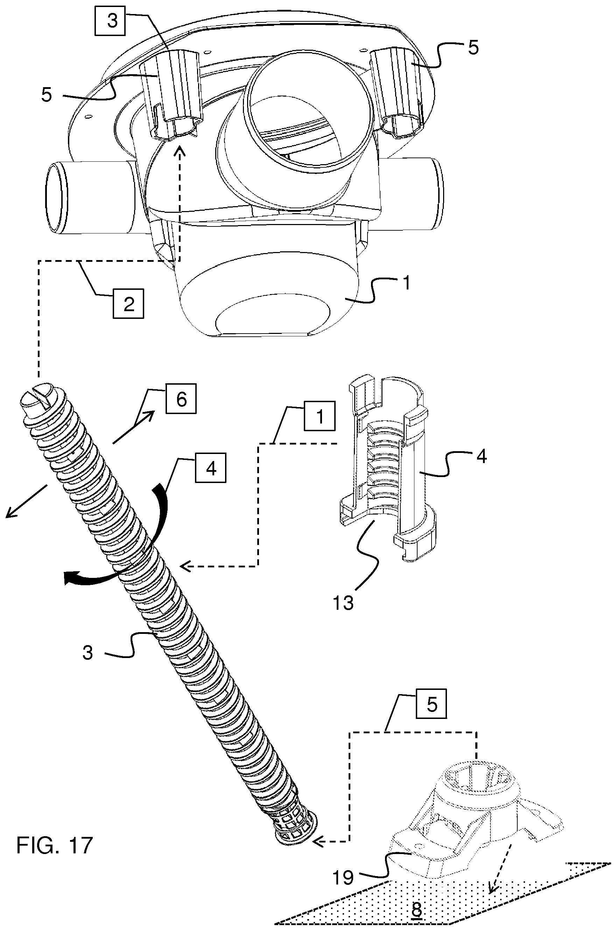

Figure 17 is a schematic view of a use of an embodiment. Hence at least one support arm 3 having an external helical thread 2 is provided with a locking means 4 having an internal helical thread 6 through a longitudinal opening 13 in the side of the arm (step 1). The support arm with its locking means is then installed to one or more slots made to the element and forming a jointing member 5 (step 2). This is accomplished by guiding the support arm arranged to the locking means into the slot where it becomes locked (step 3), as a result of which the support arm projects from the element in the position of use thereof towards the mounting base 8.

The support arm 3 projecting from the element 1 is adjusted to a desired projection by a rotating movement taking place in relation to the locking means (step 4) for establishing an approximately correct height position for the element, after which the element with the support arms projecting from it may be placed against the mounting base 8. Once the element is on the mounting base, it is positioned to the final height and position by rotating the support arm 3 in relation to the locking means 4 (by repeating step 4). The support arm may then be fastened to the mounting base by the fastening means.

The positioning may be facilitated by arranging a foot 19 to each end facing the locking means 4 of the support arm 3 (step 5). The foot in question is arranged to the end of the support arm so that it rotates in relation to both the longitudinal axis and the end of the support arm. When the foot 19 is placed against the mounting base 8, the element 1 may be positioned to its final position not only by rotating the support arm about its longitudinal axis (step 4) but also by rotating the support arm in relation to the normal 10 of the base (step 6). This will make finding the final position of the element as easy as possible. Once the final position has been found, the foot and the support arm are prevented from moving in relation to one another by placing a fastening means to one or more locking grooves provided in the foot.

It is to be understood that the above description and the related figures are only intended to illustrate the present solution. The solution is thus not restricted to the embodiment described above but it will be obvious to a person skilled in the art that a variety of variations and modifications are possible within the scope of the accompanying claims.

## Claims

1. An arrangement to be used in structures cast in concrete for supporting an element (1) from a mounting base (8), thereby supporting said element in a casting by at least one elongated support arm (3) arranged to the element and provided with an external helical thread (2), which
support arm (3) is provided with a locking means (4), comprising a sleeve at least partly surrounding a diameter (D) of the support arm,
said sleeve having an opening (13) provided in the longitudinal direction of the locking means (4),
the opening (13) being arranged to open on the entire length of the locking means for arranging the locking means (4) to an optional position on an outer surface (7) of the support arm (3) in a direction perpendicular to the longitudinal axis of the support arm,
**characterised in that**
the element (1) is provided with at least one jointing member (5), which
jointing member (5) comprises an elongated connection channel (9),
a longitudinal axis of the connection channel being substantially parallel with the normal (10) of the mounting base (8) when the element (1) is in its position of use;
the support arm (3) is arranged to the jointing member (5) of the element (1) by joining the locking means (4) arranged to the support arm to a jointing member, whereby
the locking means (4) and the jointing member (5) are together surrounding the elongated support arm (3), and
at least one of either the locking means (4) or the jointing member (5) are provided with a helical thread (6) corresponding to the helical thread (2) in the support arm, wherein
the jointing members (5) of the element (1) comprises a slot arranged to receive and mostly surrounding the locking means (4) installed to the support arm (3) for achieving a form-locking by wedging locking means against the slot walls,
the locking means comprising an inner helical thread (6) that corresponds to the outer helical thread (2) provided in the support arm (3), and
the locking means (4) comprises two parts hinged together and turnable towards each other, or two parts to be attached to each other, at least one of the parts comprising an inner helical thread (6) that corresponds to the outer helical thread (2) provided in the support arm (3).

2. An arrangement as claimed in claim 1, wherein
the jointing member (5) comprises first guide elements (12) and the locking means (4) comprises second guide elements (11) for achieving the form-locking between these parts.

3. An arrangement as claimed in any one of the preceding claims, wherein the support arm (3) comprises members (25) for receiving a tool for producing a rotating movement in relation to the longitudinal axis of the support arm.

4. An arrangement as claimed in any one of the preceding claims, wherein the support arm (3) comprises level marks (18) for indicating the distance of the element (1) from the mounting base (8).

5. An arrangement as claimed in any one of the preceding claims, wherein the support arm (3) comprises plastic material in order to facilitate the cutting of the arm.

6. A method to be used when casting structures in concrete thereby supporting an element (1) from a mounting base (8), by supporting said element during casting by arranging at least one elongated support arm (3) to the element (1), and
providing this support arm with an external helical thread (2) and a locking means (4), the locking means comprising a sleeve at least partly surrounding a diameter (D) of the support arm, whereby
an opening (13) is formed in said sleeve in a longitudinal direction of the locking means (4), and
the opening (13) is arranged to open on the entire length of the locking means for arranging the locking means (4) to an optional position on an outer surface (7) of the support arm (3) in a direction perpendicular to the longitudinal axis of the support arm,
**characterised in that**
at least one jointing member (5) is formed in the element (1);
the jointing member (5) being formed to comprise an elongated connection channel (9),
the longitudinal axis of the connection channel is arranged to be parallel with the normal (10) of the mounting base (8) when the element (1) is in its position of use;
at least one of either the locking means (4) or the jointing member (5) is provided with a helical thread (6) corresponding to the helical thread (2) in the support arm;
the support arm (3) is arranged to the jointing member (5) of the element (1) by joining the locking means (4) arranged to the support arm to a jointing member (5); and
the locking means (4) and the jointing member (5) are locked to each other thus together surrounding the elongated support arm (3); and
the projection of the support arm (3) is adjusted by a movement accomplished in relation to the longitudinal axis of the support arm to provide a desired position of the element (1), wherein
the jointing members (5) of the element (1) comprises a slot arranged to receive and mostly surrounding the locking means (4) installed to the support arm (3) for achieving the form-locking by wedging locking means against the slot walls,
the locking means comprising an inner helical thread (6) that corresponds to the outer helical thread (2) provided in the support arm (3), and
the locking means (4) comprises two parts hinged together and turnable towards each other, or two parts to be attached to each other, at least one of the parts comprising an inner helical thread (6) that corresponds to the outer helical thread (2) provided in the support arm (3).

7. A method as claimed in claim 6, wherein a form-locking is achieved between the locking means (4) and the jointing member (5).

## Patentansprüche

1. Anordnung zur Verwendung in in Beton gegossenen Strukturen zur Abstützung eines Elements (1) von einer Montagebasis (8), wodurch das Element in einem Guss durch mindestens einen länglichen Abstützarm (3) abgestützt wird, der an dem Element angeordnet ist und mit einem schraubenförmigen Außengewinde (2) versehen ist, wobei
der Abstützarm (3) mit einem Verriegelungsmittel (4) versehen ist, das eine Hülse umfasst, die einen Durchmesser (D) des Abstützarms zumindest teilweise umgibt,
die Hülse eine Öffnung (13) aufweist, die in der Längsrichtung des Verriegelungsmittels (4) bereitgestellt ist,
die Öffnung (13) angeordnet ist, um sich auf der gesamten Länge des Verriegelungsmittels zum Anordnen des Verriegelungsmittels (4) in einer wahlfreien Position auf einer Außenfläche (7) des Abstützarms (3) in einer Richtung senkrecht zur Längsachse des Abstützarms zu öffnen,
**dadurch gekennzeichnet, dass**
das Element (1) mit mindestens einem Verbindungsherstellungsglied (5) versehen ist, wobei
das Verbindungsherstellungsglied (5) einen länglichen Verbindungskanal (9) umfasst,
eine Längsachse des Verbindungskanals im Wesentlichen parallel zu der Normalen (10) der Montagebasis (8) ist, wenn das Element (1) sich in seiner Verwendungsposition befindet;
der Abstützarm (3) an dem Verbindungsherstellungsglied (5) des Elements (1) durch Herstellen einer Verbindung des an dem Abstützarm angeordneten Verriegelungsmittels (4) mit einem Verbindungsherstellungsglied angeordnet wird, wodurch
das Verriegelungsmittel (4) und das Verbindungsherstellungsglied (5) zusammen den länglichen Abstützarm (3) umgeben, und
mindestens eines von entweder dem Verriegelungsmittel (4) oder dem Verbindungsherstellungsglied (5) mit einem schraubenförmigen Gewinde (6) versehen ist, das dem schraubenförmigen Gewinde (2) des Abstützarms entspricht, wobei
das Verbindungsherstellungsglied (5) des Elements (1) einen Schlitz umfasst, der angeordnet ist, um das an dem Abstützarm (3) eingerichtete Verriegelungsmittel (4) aufzunehmen und größtenteils zu umgeben, um ein Formschließen durch Verkeilen von Verriegelungsmitteln gegen die Schlitzwände zu bewerkstelligen,
die Verriegelungsmittel ein schraubenförmiges Innengewinde (6) umfassen, das dem in dem Abstützarm (3) bereitgestellten schraubenförmigen Außengewinde (2) entspricht, und
das Verriegelungsmittel (4) zwei Teile, die zusammen schwenkbar gelagert sind und zueinander hin drehbar sind, oder zwei Teile umfasst, die aneinander anzubringen sind, wobei mindestens einer von den Teilen ein schraubenförmiges Innengewinde (6) umfasst, das dem in dem Abstützarm (3) bereitgestellten schraubenförmige Außengewinde (2) entspricht.

2. Anordnung nach Anspruch 1, wobei
das Verbindungsherstellungsglied (5) erste Führungselemente (12) umfasst und das Verriegelungsmittel (4) zweite Führungselemente (11) zum Bewerkstelligen des Formschließens zwischen diesen Teilen umfasst.

3. Anordnung nach einem der vorhergehenden Ansprüche, wobei der Abstützarm (3) Glieder (25) zum Aufnehmen eines Werkzeugs zum Erzeugen einer Drehbewegung in Bezug auf die Längsachse des Abstützarms umfasst.

4. Anordnung nach einem der vorhergehenden Ansprüche, wobei der Abstützarm (3) Niveaumarkierungen (18) zum Angeben des Abstands des Elements (1) von der Montagebasis (8) umfasst.

5. Anordnung nach einem der vorhergehenden Ansprüche, wobei der Abstützarm (3) Kunststoffmaterial umfasst, um das Schneiden des Armes zu erleichtern.

6. Verfahren, das beim Gießen von Strukturen in Beton zu verwenden ist, wodurch ein Element (1) von einer Montagebasis (8) abgestützt wird, indem das Element während des Gusses durch Anordnen von mindestens einem länglichen Abstützarm (3) an dem Element (1) unterstützt wird, und
Versehen dieses Abstützarms mit einem schraubenförmigen Außengewinde (2) und einem Verriegelungsmittel (4), wobei das Verriegelungsmittel eine Hülse umfasst, die einen Durchmesser (D) des Abstützarms zumindest teilweise umgibt, wodurch
eine Öffnung (13) in der Hülse in einer Längsrichtung des Verriegelungsmittels (4) gebildet wird, und
die Öffnung (13) angeordnet ist, um sich auf der gesamten Länge des Verriegelungsmittels zum Anordnen des Verriegelungsmittels (4) an einer wahlfreien Position an einer Außenfläche (7) des Abstützarms (3) in einer Richtung senkrecht zu der Längsachse des Abstützarms zu öffnen,
**dadurch gekennzeichnet, dass**
mindestens ein Verbindungsherstellungsglied (5) in dem Element (1) gebildet wird;
das Verbindungsherstellungsglied (5) gebildet wird, um einen länglichen Verbindungskanal (9) zu umfassen,
die Längsachse des Verbindungskanals angeordnet wird, um parallel zu der Normalen (10) der Montagebasis (8) zu sein, wenn das Element (1) sich in seiner Verwendungsposition befindet;
mindestens eines von dem Verriegelungsmittel (4) oder dem Verbindungsherstellungsglied (5) mit einem schraubenförmigen Gewinde (6) versehen wird, das dem schraubenförmigen Gewinde (2) in dem Abstützarm entspricht;
der Abstützarm (3) an dem Verbindungsherstellungsglied (5) des Elements (1) durch Herstellen einer Verbindung von dem an dem Abstützarm angeordneten Verriegelungsmittel (4) mit einem Verbindungsherstellungsglied (5) angeordnet wird; und
das Verriegelungsmittel (4) und das Verbindungsherstellungsmittel (5) aneinander verriegelt werden und somit zusammen den länglichen Abstützarm (3) umgeben; und
die Projektion des Abstützarms (3) durch eine Bewegung angepasst wird, die in Bezug zu der Längsachse des Abstützarms bewerkstelligt wird, um eine gewünschte Position des Elements (1) bereitzustellen, wobei
das Verbindungsherstellungsglied (5) des Elements (1) einen Schlitz umfasst, der angeordnet wird, um das an dem Abstützarm (3) eingerichtete Verriegelungsmittel (4) aufzunehmen und größtenteils zu umgeben, um das Formschließen durch Verkeilen des Verriegelungsmittels gegen die Schlitzwände zu bewerkstelligen,
das Verriegelungsmittel ein schraubenförmiges Innengewinde (6) umfasst, das dem in dem Abstützarm (3) bereitgestellten schraubenförmigen Außengewinde (2) entspricht, und
das Verriegelungsmittel (4) zwei Teile, die zusammen gelenkig gelagert sind und zueinander hin drehbar sind, oder zwei Teile umfasst, die aneinander anbringbar sind, wobei mindestens einer von den Teilen ein schraubenförmiges Innengewinde (6) umfasst, das dem schraubenförmigen Außengewinde (2), das in dem Abstützarm (3) bereitgestellt ist, entspricht.

7. Verfahren nach Anspruch 6, wobei ein Formschließen zwischen dem Verriegelungsmittel (4) und dem Verbindungsherstellungsglied (5) bewerkstelligt wird.

## Revendications

1. Agencement destiné à être utilisé dans des structures moulées dans du béton pour supporter un élément (1) à partir d'une base de montage (8), supportant ainsi ledit élément dans un moulage par au moins un bras de support allongé (3) agencé sur l'élément et prévu avec un filetage hélicoïdal externe (2),
lequel bras de support (3) est prévu avec un moyen de verrouillage (4) comprenant un manchon entourant au moins partiellement un diamètre (D) du bras de support,
ledit manchon ayant une ouverture (13) prévue dans la direction longitudinale du moyen de verrouillage (4),
l'ouverture (13) étant agencée pour s'ouvrir sur toute la longueur du moyen de verrouillage afin d'agencer le moyen de verrouillage (4) dans une position facultative sur une surface externe (7) du bras de support (3) dans une direction perpendiculaire à l'axe longitudinal du bras de support,
**caractérisé en ce que** :
l'élément (1) est prévu avec au moins un élément de jonction (5),
lequel élément de jonction (5) comprend un canal de raccordement allongé (9),
un axe longitudinal du canal de raccordement étant sensiblement parallèle à la normale (10) de la base de montage (8) lorsque l'élément (1) est dans sa position d'utilisation ;
le bras de support (3) est agencé sur l'élément de jonction (5) de l'élément (1) en assemblant le moyen de verrouillage (4) agencé sur le bras de support avec un élément de jonction, moyennant quoi :
le moyen de verrouillage (4) et l'élément de jonction (5) entourent ensemble le bras de support allongé (3), et
au moins l'un parmi le moyen de verrouillage (4) ou l'élément de jonction (5) est prévu avec un filetage hélicoïdal (6) correspondant au filetage hélicoïdal (2) dans le bras de support, dans lequel :
l'élément de jonction (5) de l'élément (1) comprend une fente agencée pour recevoir et entourer au maximum le moyen de verrouillage (4) installé sur le bras de support (3) afin d'obtenir un verrouillage par complémentarité de forme en calant le moyen de verrouillage contre les parois de fente,
ledit moyen de verrouillage comprenant un filetage hélicoïdal interne (6) qui correspond au filetage hélicoïdal externe (2) prévu dans le bras de support (3), et
le moyen de verrouillage (4) comprend deux parties articulées ensemble et pouvant tourner l'une autour de l'autre, ou bien deux parties à fixer entre elle, au moins l'une des parties comprenant un filetage hélicoïdal interne (6) qui correspond au filetage hélicoïdal externe (2) prévu dans le bras de support (3).

2. Agencement selon la revendication 1, dans lequel :
l'élément de jonction (5) comprend des premiers éléments de guidage (12) et le moyen de verrouillage (4) comprend deux éléments de guidage (11) pour obtenir le verrouillage par complémentarité de forme entre ces parties.

3. Agencement selon l'une quelconque des revendications précédentes, dans lequel le bras de support (3) comprend des éléments (25) pour recevoir un outil afin de produire un mouvement de rotation par rapport à l'axe longitudinal du bras de support.

4. Agencement selon l'une quelconque des revendications précédentes, dans lequel le bras de support (3) comprend des marques de niveau (18) pour indiquer la distance de l'élément (1) par rapport à la base de montage (8).

5. Agencement selon l'une quelconque des revendications précédentes, dans lequel le bras de support (3) comprend une matière plastique afin de faciliter la découpe du bras.

6. Procédé destiné à être utilisé lors du moulage de structures dans du béton, supportant ainsi un élément (1) à partir d'une base de montage (8), en supportant ledit élément pendant le moulage en agençant au moins un bras de support allongé (3) sur l'élément (1), et
prévoir ce bras de support avec un filetage hélicoïdal externe (2) et un moyen de verrouillage (4), le moyen de verrouillage comprenant un manchon entourant au moins partiellement un diamètre (D) du bras de support, moyennant quoi :
une ouverture (13) est formée dans ledit manchon dans une direction longitudinale du moyen de verrouillage (4), et
l'ouverture (13) est agencée pour s'ouvrir sur toute la longueur du moyen de verrouillage pour agencer le moyen de verrouillage (4) dans une position facultative sur une surface externe (7) du bras de support (3) dans une direction perpendiculaire à l'axe longitudinal du bras de support,
**caractérisé en ce que** :
au moins un élément de jonction (5) est formé dans l'élément (1) ;
l'élément de jonction (5) étant formé pour comprendre un canal de raccordement allongé (9),
l'axe longitudinal du canal de raccordement est agencé pour être parallèle à la normale (10) de la base de montage (8) lorsque l'élément (1) est dans sa position d'utilisation ;
au moins l'un parmi le moyen de verrouillage (4) ou l'élément de jonction (5) est prévu avec un filetage hélicoïdal (6) correspondant au filetage hélicoïdal (2) dans le bras de support ;
le bras de support (3) est agencé sur l'élément de jonction (5) de l'élément (1) en assemblant le moyen de verrouillage (4) agencé sur le bras de support, avec un élément de jonction (5) ; et
le moyen de verrouillage (4) et l'élément de jonction (5) sont verrouillées entre eux, entourant ainsi ensemble le bras de support allongé (3) ; et
la saillie du bras de support (3) est ajustée par un mouvement accompli par rapport à l'axe longitudinal du bras de support afin de fournir une position souhaitée de l'élément (1), dans lequel :
les éléments de jonction (5) de l'élément (1) comprennent une fente agencée pour recevoir et entourer au maximum le moyen de verrouillage (4) installé sur le bras de support (3) afin d'obtenir un verrouillage par complémentarité de forme en calant le moyen de verrouillage contre les parois de fente,
le moyen de verrouillage comprenant un filetage hélicoïdal interne (6) qui correspond au filetage hélicoïdal externe (2) prévu dans le bras de support (3), et
le moyen de verrouillage (4) comprend deux parties articulées ensemble et pouvant tourner l'une vers l'autre, ou bien deux parties à fixer entre elles, au moins l'une des parties comprenant un filetage hélicoïdal interne (6) qui correspond au filetage hélicoïdal externe (2) prévu dans le bras de support (3).

7. Procédé selon la revendication 6, dans lequel un verrouillage par complémentarité de forme est obtenu entre le moyen de verrouillage (4) et l'élément de jonction (5).
